# EUROPEAN PATENT APPLICATION

(11) **EP 1 091 038 A2**
(43) Date of publication of application: **11.04.2001**
(21) Application number: 00307553.8
(22) Date of filing: 01.09.2000
(51) Int. Cl.: D06N 7/00, D04H 11/00, D04H 13/00, D04H 1/54, B32B 5/26

(54) **Modular carpet tile**

(30) Priority: 03.09.1999 GB 9920689
(71) Applicant: Gaskell Textiles Limited, Oswaldtwistle, Accrington, Lancashire BB5 3QQ (GB)
(72) Inventor: Forrester, Peter, c/o Gaskell Textiles Limited, Accrington, Lancashire BB5 3QQ (GB)
(74) Representative: Stuttard, Garry Philip

(57) **Abstract**

The invention relates to a modular carpet tile with improved properties, in particular to a modular carpet tile with an integral resilient, non-woven backing and to a process for preparing a resilient, non-woven backing.

## Description

The present invention relates to a modular carpet tile with improved properties, in particular to a modular carpet tile with an integral backing and a process for preparing a resilient, non-woven backing.

The use of modular carpet tiles offers several advantages over wall-to-wall broadloom carpet or other floorcoverings. These advantages include an extended lifetime achievable by repositioning of tiles to equalise wear and low cost replacement of badly damaged areas. Generally speaking, conventional modular carpet tiles are based on a combination of surface material and a rigid or semi-rigid backing medium (such as bitumen or PVC) which provides little or no cushioning or resilience thereby making the tile hard on feet and not particularly comfortable.

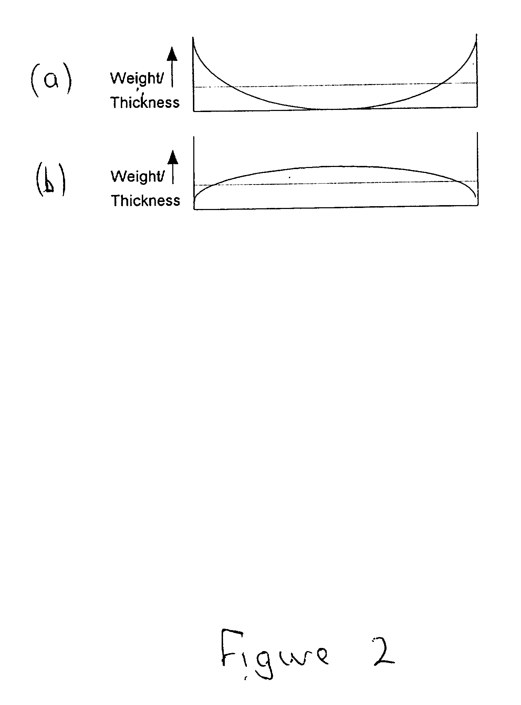

The effect of attaching backing materials to carpet is well known to those skilled in the art. The use of fibrous needlepunch backings in combination with tufted, woven or bonded carpet tiles is similarly well established but has never achieved significant commercial success. One reason for this is that excessive thickness variation of the needlepunch leads to unacceptable height differences or "stepping" between adjacent tiles. This is particularly pronounced at the edges of the tile and is illustrated schematically in Figure 2a (weight/thickness cross-section for a carded cross-lapped needled non-woven) and Figure 2b (weight/thickness cross-section for an air-laid needled non-woven). The variation in non-woven thickness leads to exposed edges and in the worst cases, premature failure of the tile resulting from "scuffing" of the raised edge. A second reason for the lack of commercial success is that the fibres in a conventional needlepunch are held together only by entanglement and frictional forces. The resilience of the backing material is therefore relatively short-lived under continuous static and dynamic load conditions.

The present invention seeks to overcome drawbacks in the conventional manufacture of modular carpet tiles by providing an improved process for preparing a resilient, non-woven backing for incorporation into a modular carpet tile which renders manufacture both technically and commercially viable.

Thus viewed from one aspect the present invention provides a process for preparing a resilient, non-woven backing for incorporation into a modular carpet tile, said process comprising:
feeding a non-woven material into a processing device capable of applying a differential processing pressure to the surface of the non-woven material;
heating the non-woven material to an elevated processing temperature;
applying to the surface of the non-woven material a differential processing pressure at the elevated processing temperature;
cooling the non-woven material to form a resilient, non-woven backing.

The key effect of the process of the invention is the controlled increase in bulk density and equalisation of thickness across the surface of the non-woven material which is achievable by the application of differential pressure at the elevated processing temperature. Under appropriate conditions, it has been possible to reduce the thickness variation to a practically acceptable level eg to 2 to 5% of the nominal value.

Preferably the process is carried out in a textile calendar (a step referred to hereinafter as calendration). A textile calendar comprises a plurality of rollers which may be heated by any suitable means (*eg* by gas, electricity, hot oil or induction). The non-woven material may be heated to the processing temperature before passing through the rollers or heated to the processing temperature by the rollers. The rollers may be rotated whilst held together under high pressure conditions and non-woven material which is fed between pairs of rollers may be subjected to differential pressure. Preferably high pressure is applied to those parts of the non-woven material which have large initial thickness and low pressure to those parts which have small initial thickness. Suitable textile calendars are available from *inter alia* Kusters or Ramisch (Germany).

The precise processing conditions under which the process of the invention is carried out are dependent upon factors such as the composition, weight and resultant density of the non-woven material. Preferred non-woven materials are discussed hereinafter.

Typically, the processing pressure is in the range 50 to 250 N/mm. The elevated processing temperature may be tailored to either heat set or thermobond the non-woven material as required. The elevated processing temperature is typically in the range 100 to 250°C. The resultant density is typically in the range 0.08 to 0.4g/cm³.

In a preferred embodiment of the process, differential temperature may be applied to fuse and glaze the lower surface of the resilient, non-woven backing to improve abrasion resistance.

The resilient, non-woven backing may be incorporated subsequently into the modular carpet tile using suitable conventional roller machines *(eg* spread, lay and nip rollers) or any other method. Suitable bonding agents will be known to those skilled in the art. Preferably a stiff bituminous material is used as a bonding agent. Preliminary steps in the process of the invention may include those of conventional non-woven manufacture *eg* carding/cross-lapping or air-lay methods followed by needling (as desired). The preparation of the upper wear surface may be conducted separately eg by tufting, weaving or needling (as desired).

Modular carpet tiles incorporating the resilient, non-woven backing of the preferred dimension may be cut using conventional press, knife, ultrasonic or laser techniques.

In a further aspect which has independent patentable significance, the present invention is based on the recognition that an integrally backed, modular carpet tile having a particular combination of components exhibits a number of improvements over existing modular carpet tiles. In particular, a modular carpet tile incorporating a resilient, non-woven backing has a number of benefits.

Viewed from a further aspect the present invention provides a modular carpet tile comprising:
an upper wear surface anchored in a polymeric anchor layer, wherein said polymeric anchor layer is bonded to a resilient, non-woven backing by a stiff bituminous material.

The incorporation of a resilient, non-woven backing into a modular carpet tile improves the performance of that carpet tile as a floorcovering in a number of ways. These include:
a) absorption of vertical compressive stresses by the resilient, non-woven backing protects the carpet pile and improves the long term resistance to flattening and retention of appearance;
b) the resilient, non-woven backing gives an underfoot feel which is desirably cushioned and "springy". At the correct level, this is generally regarded as being less fatiguing and more comfortable than conventional modular carpet tiles;
c) the combination of a bituminous layer and a resilient, non-woven backing provides improved sound absorption. In other words, sound transmission and reverberation levels are reduced in comparison to equivalent conventional constructions; and
d) the incorporation of the relatively low bulk density resilient, non-woven backing improves the thermal insulation properties of the tile.

The resilient non-woven backing may possess the general property of absorption by compression of both static and dynamic loads applied in a direction normal to the horizontal plane. Preferably the backing returns at least 90% of its original thickness within one hour of the load being removed. When tested to BS4098, the backing preferably performs to the following ranges depending on the severity of use:

| **Intended Use** | **Work of Compression (Jm**^{**-2**}**)** | **Compression (m x 10**^{**-3**}**)** |
|---|---|---|
| Light Domestic | 50-75 | 4-7 |
| General Domestic | 75-120 | 4-7 |
| Luxury | 120-200 | 4-7 |
| General Contract | 50-75 | 2-4 |
| Heavy Contract | 75-200 | 2-4 |

The non-woven material may comprise synthetic fibres *(eg* one or more of the group consisting of polyester (PET), polypropylene (PP), polyamide (PA), polyacrylonitrile (PAN) and viscose). The non-woven material may comprise natural fibres *(eg* one or more of the group consisting of wool, cotton, jute, coir, hemp, sisal). The non-woven material may comprise natural and synthetic fibres. The fibres may be virgin or recycled/regenerated fibres (or a combination of these).

The non-woven material may contain functional additives such as antistatic or flame retardant fibres.

The non-woven material may be heat settable ie can be physically altered by the application of heat at temperatures below the melting or degradation point thereby rendering the network needled structure more durable.

In a preferred embodiment, the non-woven material is capable of thermal bonding. This gives the non-woven backing improved durability and resilience over conventional needlepunch backings which (as mentioned hereinbefore) are held only by entanglement and frictional forces.

Particularly preferred non-woven materials capable of thermal bonding comprise a proportion of low-melt fibres capable of melting at the elevated processing temperature *(eg* at the elevated temperature at which calendration is carried out) and a proportion of non-melt fibre which fail to melt at the processing temperature. At the elevated processing temperature, the low-melt fibres flow within the matrix of the non-melt fibres and when cooled are capable of acting as a binder for the non-melt fibres. This imparts some permanence to the non-woven backing.

The non-woven material preferably comprises a proportion of low melt fibres in the range 1 to 50wt%. Preferably the low melt fibres are selected from the group consisting of PET, polyethylene (PE), PP, ethylene vinyl acetate (EVA) and combinations thereof. Preferably the non-melt fibres are synthetic fibres *eg* of the type referred to above.
Preferably, the melting point of the non-melt fibres is at least 15°C higher than the melting point of the low melt fibres. Preferably, this temperature difference is maximised to widen the scope of choice for the processing temperature and thereby widen the manufacturing window for the process.

Preferably the non-woven material comprises a non-melt fibre being polyester (eg recycled polyester) and a low-melt fibre being copolyester. Particularly preferably, polyester is present in the range 80-90wt% and copolyester in the range 10-20wt%.

The wear surface may be of conventional type such as tufted, woven Axminster, Wilton or fibre bonded. The wear surface may be constructed from conventional pile materials such as PP, PA, PET, PAN, wool or a combination of these. The wear surface may be adapted to use in domestic or contract applications whereby the nature of the construction and materials are tailored to the intensity of use.

Where the wear surface is a tufted surface, the modular carpet tile further comprises a primary backing layer to provide a stable carrier for the pile yarn. This may be based on woven or non-woven substrates made from materials such as PP/PA/PET or jute. Preferably the primary backing layer comprises PA and PET. The substrate may be typically present in the range 50 to 300 g/m².

The polymeric anchor layer is capable of imparting to the carpet tile such properties as fibre lock, tuft lock, water resistance, dimensional stability, edge fray resistance, anti-static, bacteriacidal and flame retardant protection as desired. The layer may comprise an aqueous emulsion polymer comprising any one or more of styrene-butadiene rubber (SBR), acrylic, EVA or polyvinyl acrylate (PVA) or a melt coating (eg of PP, PE, PA, PET). Preferably the layer comprises PVA and SBR. The layer is typically applied in the dry weight range 100 to 2000g/m². The layer may additionally comprise mineral fillers (such as calcium carbonate), polymeric additives, antistatic and flame retardant agents.

The stiff bituminous material preferably takes the form of a thermoplastic bonding layer. This fulfills a number of functions including *inter alia* (1) acting as an adhesive to bond the resilient, non-woven backing to the polymeric anchor layer; (2) providing a rigid interlayer to retard the onset and reduce the extent of permanent indentation of the resilient, non-woven backing under heavy point loading (eg chair legs and stiletto heels); (3) increasing the dimensional stability of the tile by adding stiffness and mass; and (4) improving the integrity of the tile resulting in a clean, non-fray cut edge.

The bituminous material may additionally comprise mineral fillers (such as calcium carbonate), polymeric additives, antistatic and flame retardant agents. The material is typically present in the weight range 500 to 5000g/m².

The modular carpet tile may further comprise a stabilising layer in the stiff bituminous material. This may be based on woven, non-woven or a similar construction of glass or synthetic polymer. Woven glass is preferred. The stabilising layer provides additional dimensional stability to those wear surface which are intrinsically less stable (such as crossover tufted and woven constructions). Where present, the stabilising layer is typically in the weight range 20 to 200g/m².

Depending on the chosen application and requirements, the resilient, non-woven backing may be imparted with the following characteristics:-
Weight range - 300-3000 g/M²
Thickness range - 1.25 - 10.0 mm
Electrical conductivity to ICL/IBM requirements
Non-fray both in use and under tile cutting conditions
Thermal stability up to bitumen processing temperatures (about 150°C)
Good mechanical bond to hot bituminous material
Thickness variation (length and width) better than ± 0.2mm
Good long-term compression resistance, hysteresis loss, and compressibility performance
Excellent dimensional stability under wet and dry ambient conditions
Little defibrillation of the exposed surface under repeated tackifier adhesive stick/lift cycles
Accepts printing ink legibly and durably
No adverse affect on carpet flammability
No delamination under repeated edge abrasion and scuffing
Chemically and physically inert to common aqueous cleaning fluids.

The modular carpet tile may be adapted with one or more of these characteristics for heavy contract use or light contract/domestic use.

The invention will now be described in a non-limitative sense with reference to the following examples and accompanying Figures in which:
Figure 1 represents schematically a cross-section of a modular carpet tile of the invention;
Figure 2a indicates typical weight/thickness cross-section for a carded crosslapped needled non-woven and Figure 2b indicates typical weight/thickness cross-section for an air-laid needled non-woven; and
Figure 3 is a schematic representation of a preferred process of the invention.

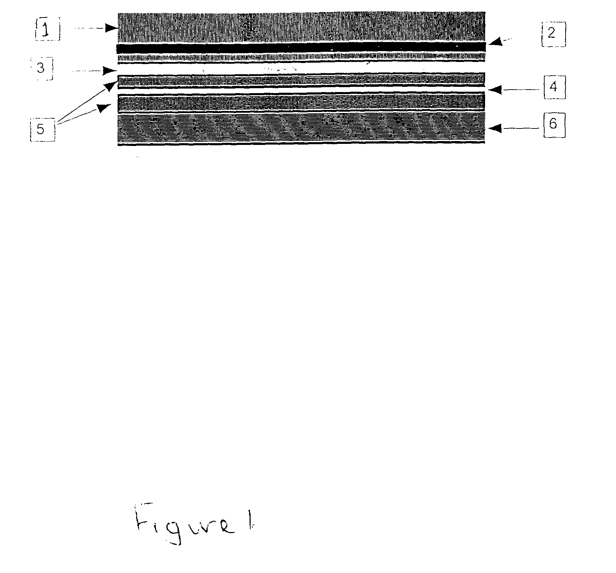

In Figure 1 there is illustrated schematically the various component parts of the modular carpet tile of the invention:
1 - wear surface
(2 - optional primary backing layer for tufted surfaces)
3 - polymeric anchor layer
(4 - optional stabilising layer)
5 - stiff bituminous bonding layer
6 - resilient, non-woven backing.

### Example 1 - Heavy Contract Carpet Tile

1. Tufted nylon (Polyamide) yarn based on 520g/m² minimum (loop pile) or 1000g/m² minimum (cut pile) pile weight.
2. PA/PET spunbonded primary backing layer, 100g/m² minimum.
3. PVA/SBR antistatic and flame retardant emulsion polymer applied at 600g/m² minimum.
4. Woven glass reinforcement, 30 g/m² minimum.
5. A composition comprising:

| | |
|---|---|
| Asphalt (Bitumen) | 40% by weight |
| Calcium Carbonate | 50% by weight |
| Polymer modifier | 8% by weight |
| Antistatic agent | 2% by weight |

Application weight 2,500 g/m².
6. A fibre composition based on:

| | |
|---|---|
| Recycled polyester (PET) | 80% by weight |
| Low melt Copolyester | 18% by weight |
| Antistatic Fibre (PAN) | 2% by weight |

Processed at 200°C and 150 N/mm

| | |
|---|---|
| Resultant weight | 800g/m² |
| Resultant thickness | 4.5mm |
| Resultant density | 0.18g/cm³ |

### Example 2 - Light Contract/Domestic Carpet Tile

1. Tufted Polypropylene yarn based on 400g/m² minimum (loop pile) or 800 g/m² minimum (cut pile) pile weight.
2. PA/PET spunbonded primary backing layer, 80g/m² minimum.

3. PVA/SBR emulsion polymer applied at 500g/m² minimum.
5. A composition comprising:

| | |
|---|---|
| Asphalt (Bitumen) | 50% by weight |
| Calcium Carbonate | 50% by weight |

Application weight 1,500 g/m².
6. A fibre composition based on:

| | |
|---|---|
| Recycled polyester (PET) | 90% by weight |
| Low melt Copolyester | 10% by weight |

Processed at 220°C and 200 N/mm

| | |
|---|---|
| Resultant weight | 500g/m² |
| Resultant thickness | 3.5 mm |
| Resultant density | 0.14g/cm³ |

### Example 3 - Domestic carpet tile

1. Tufted Polypropylene yarn based on 400g/m² minimum (loop pile) or 800 g/m² minimum (cut pile) pile weight.
2. PA/PET spunbonded primary backing layer, 80g/m² minimum.
3. PVA/SBR emulsion polymer applied at 500g/m² minimum.
5. A composition comprising:

| | |
|---|---|
| Asphalt (Bitumen) | 30% by weight |
| Calcium Carbonate | 70% by weight |

Application weight 1,500 g/m².
6. A fibre composition based on:

| | |
|---|---|
| Recycled polyester (PET) | 90% by weight |
| Low melt Copolyester | 10% by weight |

Processed at 220°C and 200 N/mm

| | |
|---|---|
| Resultant weight | 400g/m² |
| Resultant thickness | 3.0 mm |
| Resultant density | 1.33g/cm³ |

### Example 4

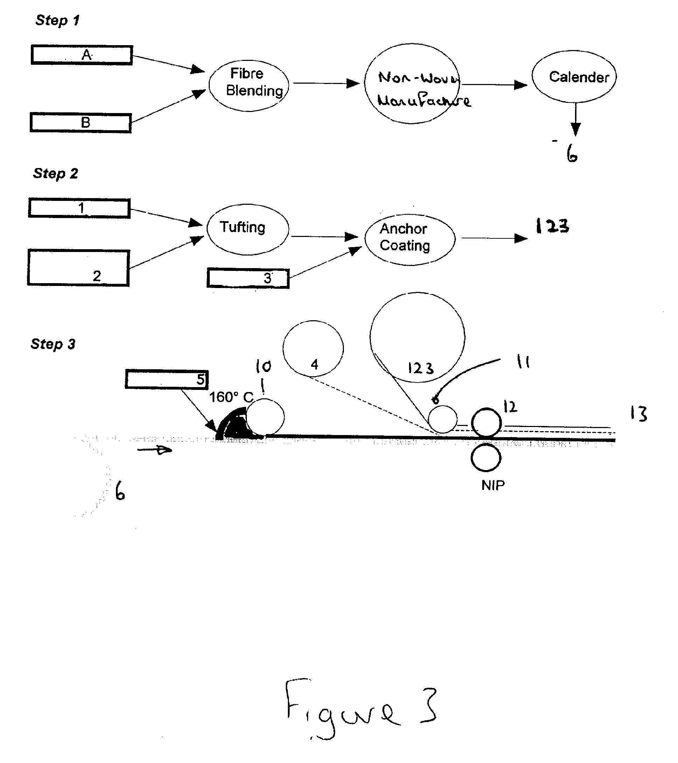

With reference to Figure 3, a preferred embodiment of the process of the invention will be described schematically and by retaining the reference numerals of Figure 1.

In step 2, yarn 1 and primary backing 2 are subjected to conventional tufting. To lock the yarn, a latex anchor coating 3 is added. The product is a tufted coated carpet 123.

In step 1, fibres A and B are blended and converted into non-woven material by conventional non-woven manufacture. The non-woven material is fed into a calendar where it is subjected to heating and differential pressure as desired to produce a resilient, non-woven backing 6.

In step 3, resilient non-woven backing 6 is fed into an appropriate textile coating and laminating line together with bituminous material 5 at 160°C. The bituminous material 5 is pumped onto the upper surface of the resilient non-woven backing 6 and spread by the action of the spread roller 10. Glass 4 may be added to the bituminous material at the position of the laying roller 11. The tufted coated carpet is fed onto the bituminous material by the laying roller 11 and the composite is fed through nip rollers 12 prior to chilling and cutting 13.

## Claims

1. A process for preparing a resilient, non-woven backing for incorporation into a modular carpet tile, said process comprising:
feeding a non-woven material into a processing device capable of applying a differential processing pressure to the surface of the non-woven material;
heating the non-woven material to an elevated processing temperature;
applying to the surface of the non-woven material a differential processing pressure at the elevated processing temperature;
cooling the non-woven material to form a resilient, non-woven backing.

2. A process as claimed in claim 1 wherein the processing device is a textile calendar.

3. A process as claimed in claim 1 or 2 wherein differential temperature is applied so as to fuse and glaze the lower surface of the resilient, non-woven backing so as to improve abrasion resistance.

4. A process as claimed in any preceding claim further comprising: incorporating the resilient, non-woven backing into a modular carpet tile.

5. A process as claimed in any preceding claim wherein the non-woven material comprises synthetic fibres.

6. A process as claimed in claim 5 wherein the synthetic fibres comprise one or more of the group consisting of polyester (PET), polypropylene (PP), polyamide (PA), polyacrylonitrile (PAN) and viscose.

7. A process as claimed in any of claims 1 to 4 wherein the non-woven material comprises natural fibres.

8. A process as claimed in claim 7 wherein the natural fibres comprise one or more of the group consisting of wool, cotton, jute, coir, hemp and sisal.

9. A process as claimed in any preceding claim wherein the non-woven material comprises natural and synthetic fibres.

10. A process as claimed in any preceding claim wherein the non-woven material is heat settable.

11. A process as claimed in any preceding claim wherein the non-woven material is capable of thermal bonding.

12. A process as claimed in claim 11 wherein the non-woven material capable of thermal bonding comprises: a proportion of low-melt fibres capable of melting at the elevated processing temperature and a proportion of non-melt fibres which fail to melt at the elevated processing temperature.

13. A process as claimed in claim 12 wherein the non-woven material comprises a proportion of low melt fibres in the range 1 to 50wt%.

14. A process as claimed in claim 12 or 13 wherein the low melt fibres are selected from the group consisting of polyester (PET), polyethylene (PE), PP, ethylene vinyl acetate (EVA) and combinations thereof.

15. A process as claimed in claim 12, 13 or 14 wherein the non-melt fibres are synthetic fibres.

16. A process as claimed in any of claims 12 to 15 wherein the melting point of the non-melt fibres is at least 15°C higher than the melting point of the low melt fibres.

17. A process as claimed in any of claims 12 to 16 wherein the non-woven material comprises a non-melt fibre being polyester and a low-melt fibre being copolyester.

18. A process as claimed in claim 17 wherein polyester is present in the range 80-90wt% and copolyester in the range 10-20wt%.

19. A modular carpet tile comprising:
an upper wear surface anchored in a polymeric anchor layer, wherein said polymeric anchor layer is bonded to a resilient, non-woven backing by a stiff bituminous material.

20. A modular carpet tile as claimed in claim 19 wherein the resilient, non-woven backing is obtainable from non-woven material as defined in any of claims 5 to 18.

21. A modular carpet tile as claimed in claim 19 or 20 wherein the resilient, non-woven backing is obtainable from a process as defined in any of claims 1 to 18.

22. A modular carpet tile as claimed in any of claims 19 to 21 wherein in response to a static and/or dynamic load applied in a direction normal to its horizontal plane, the resilient, non-woven backing returns to at least 90% of its original thickness within one hour of the load being removed.

23. A modular carpet tile as claimed in any of claims 19 to 22 wherein the wear surface is a tufted surface and the modular carpet tile further comprises a primary backing layer to provide a stable carrier for the tufted surface.

24. A modular carpet tile as claimed in any of claims 19 to 22 wherein the wear surface is a fibre bonded surface and the modular carpet tile further comprises a primary backing layer to provide a stable carrier for the tufted surface.

25. A modular carpet tile as claimed in any of claims 19 to 24 wherein the polymeric anchor layer comprises an aqueous emulsion polymer or a melt coating.

26. A modular carpet tile as claimed in claim 25 wherein the aqueous emulsion polymer comprises one or more of the group consisting of styrene-butadiene rubber (SBR), acrylic, EVA and polyvinyl acrylate (PVA).

27. A modular carpet tile as claimed in claim 25 or 26 wherein the aqueous emulsion polymer comprises PVA and SBR.

28. A modular carpet tile as claimed in claim 25 wherein the melt coating is of PP, PE, PA or PT.

29. A modular carpet tile as claimed in any of claims 19 to 28 wherein the stiff bituminous material takes the form of a thermoplastic bonding layer.

30. A modular carpet tile as claimed in any of claims 19 to 29 further comprising a stabilising layer in the stiff bituminous material.

31. A modular carpet tile as claimed in claim 30 wherein the stabilising layer is based on woven, non-woven or a similar construction of glass or synthetic polymer.
